# FASCICULE DE BREVET EUROPEEN

(11) **EP 2 576 161 B1**
(45) Date de publication et mention de la délivrance du brevet: **14.10.2015**
(21) Numéro de dépôt: 11728644.3
(22) Date de dépôt: 23.05.2011
(51) Int. Cl.: B26D 5/02, B26F 1/02

(54) **PROCEDE ET MACHINE DE POINÇONNAGE DE PIECES DE CARROSSERIE**
VERFAHREN UND MASCHINE ZUM STANZEN VON KAROSSERIETEILEN
METHOD AND MACHINE FOR PUNCHING BODYWORK COMPONENTS

(30) Priorité: 24.05.2010 FR 1054002
(43) Date de publication de la demande: 10.04.2013
(73) Titulaire: Compagnie Plastic Omnium, 69007 Lyon (FR)
(72) Inventeur: TRESSE, David, F-70210 Polaincourt (FR)
(74) Mandataire: Remy, Vincent Noel Paul
(86) Numéro de dépôt international: PCT/FR2011/051163
(87) Numéro de publication internationale: WO 2011/148089

(56) Documents cités:
- EP-A2- 1 586 427
- DE-U1- 20 019 775
- GB-A- 2 051 651

## Description

La présente invention concerne un procédé de poinçonnage de pièces de carrosserie de véhicules automobiles, notamment de peaux pour y installer des capteurs d'aide au stationnement ou des lave-projecteurs, une machine de poinçonnage et les pièces de carrosserie ainsi obtenues.

Dans la présente description, on entend par « peau » d'une pièce de carrosserie la paroi de cette pièce qui présente une face visible de l'extérieur du véhicule une fois montée sur ledit véhicule. Il est courant de parler de peau de pare-chocs mais l'invention concerne aussi des peaux d'ailes ou des jupes, une jupe étant une paroi prolongeant un pare-chocs vers le bas, à l'avant ou à l'arrière d'un véhicule.

Des capteurs à ultrasons sont couramment utilisés pour constituer des systèmes d'aide au stationnement, souvent désignés par l'acronyme PDC (pour Parc Distance Control). Dans la suite de la description, on désignera par le terme « capteur PDC » de tels capteurs à ultrasons.

Les capteurs PDC se montent en général par groupes de trois, quatre ou six sur une peau de pare-chocs ou sur une jupe, en étant maintenus du côté intérieur du pare-chocs par un support, désigné support PDC, solidarisé à la face intérieure de la peau de pare-chocs. Le support maintient le capteur PDC en regard d'un orifice ménagé dans la peau de pare-chocs.

Dans l'état de la technique, le montage d'un capteur PDC sur une peau de pare-chocs nécessite deux opérations distinctes, à savoir tout d'abord le poinçonnage de la peau pour former un orifice, puis la fixation du support sur la peau en regard de cet orifice.

Ces deux opérations sont réalisées sur deux postes distincts, mais le plus souvent après application d'une peinture, de sorte que la peau de pare-chocs qui est manipulée pour subir ces deux traitements successifs est susceptible d'être rayée lors de son transfert ou de son dépôt sur chacun des postes.

Il convient de préciser que la formation des orifices sur une peau de pare-chocs n'est en général pas effectuée lors de la fabrication de la peau, car la présence de capteurs PDC est une option que l'on ne retrouve pas sur toutes les versions commerciales du véhicule. Les peaux de pare-chocs sont donc toutes fabriquées selon une version de base dépourvue d'orifices et l'ajout des capteurs PDC est réalisée dans un second temps, le plus souvent après peinture.

Les mêmes principes s'appliquent aux lave-projecteurs intégrés aux peaux de pare-chocs.

La présente invention propose un procédé de poinçonnage dont la mise en oeuvre intervient lors de l'étape de formation du ou des orifices dans la peau de pare-chocs.

Pour obtenir un poinçonnage de qualité qui ne laisse aucun fil ni bavure après découpe, il faut utiliser un poinçon à déplacement lent, de l'ordre de 1 millimètre par seconde, qui est actionné par un vérin puissant fournissant un effort de poinçonnage de l'ordre de 1000 daN par orifice.

Le coût d'un tel vérin, ainsi que les moyens nécessaires à son fonctionnement, nuisent à une optimisation poussée du poste de poinçonnage. En outre, la place qu'il faut prévoir autour de la pièce pour pouvoir la positionner sans risquer de la rayer impose d'éloigner les poinçons du posage (c'est-à-dire du support sur lequel on dépose la pièce pour la poinçonner), ce qui augmente l'encombrement du poste de poinçonnage tout en allongeant le temps de cycle car des vérins puissants mais lents mettent du temps à parcourir la distance qui les sépare de la pièce.

La présente invention vise à proposer une alternative au recours à des vérins lents et puissants pour remédier aux inconvénients précités.

La présente invention a pour objet un procédé de poinçonnage de pièces de carrosserie, notamment d'une peau pour y installer des capteurs d'aide au stationnement ou des lave-projecteurs, selon lequel on dépose une pièce de carrosserie sur un posage à distance duquel un poinçon est maintenu en position de repos et on déplace le poinçon d'abord sur une première course en direction du posage pour l'amener à proximité de la pièce, puis sur une seconde course pour percer ladite pièce, le déplacement du poinçon sur la seconde course s'effectuant à une vitesse de déplacement par rapport à la pièce n'excédant pas 10mm/s, caractérisé en ce qu'on déplace le poinçon sur la première course à l'aide d'un moyen de déplacement conférant au poinçon une vitesse de déplacement par rapport à la pièce d'au moins 50 mm/s.

Le procédé selon l'invention est avantageux en ce qu'il dissocie les étapes d'approche du poinçon et de poinçonnage proprement dit (désigné ici « perçage ») par utilisation du poinçon.

Ainsi, dans l'hypothèse où une course d'approche de 300 millimètres serait ménagée pour laisser de la place autour de la pièce afin d'éviter de la rayer, le déplacement du poinçon depuis sa position de repos jusqu'à sa position d'utilisation s'effectuerait en 2 à 3 secondes, sans pour autant que la qualité du poinçonnage ne s'en trouve dégradée étant donné que le poinçonnage proprement dit (c'est-à-dire « perçage ») est toujours effectué à une vitesse réduite d'au plus 10 millimètres par seconde.

De préférence, la vitesse de déplacement lors du perçage est d'environ 1 mm/s et la vitesse de déplacement lors de l'approche est d'environ 100 mm/s.

Dans ces conditions, entre le moment où le poinçon commence sa première course et le moment où il revient en position de repos, il s'écoule, grâce à l'invention, entre 5 et 15 secondes.

Une solution pourrait être mise en oeuvre à l'aide de différents moyens de déplacement. On pourra tout d'abord recourir à un vérin à vitesse de déplacement réglable et variable. Cette solution n'est cependant pas préférée car de tels vérins sont coûteux et difficiles à régler.

Une autre possibilité pourrait consister à utiliser un vérin à chambres multiples, comme, par exemple, dans le document DE 20019775 U. Une première chambre de petite section et s'étendant sur la première course procure une vitesse de déplacement rapide pour une faible puissance et une deuxième chambre, mise en jeu à l'issue de la première course et s'étendant sur la seconde course, procure une faible vitesse de déplacement et une puissance élevée.

Les deux solutions ne sont pas objet de la présente invention.

Dans la solution selon l'invention, on déplace le poinçon sur la première course à l'aide d'un vérin d'approche et sur la seconde course à l'aide d'un moyen distinct du vérin d'approche.

Cette solution permet d'utiliser des vérins très standards, disponibles à prix modéré dans le commerce, ce qui présente des avantages en termes d'approvisionnement et de coût.

Pour mettre en oeuvre le procédé décrit ci-dessus, l'invention propose également une machine de poinçonnage de pièce de carrosserie, notamment de peau pour y installer des capteurs d'aide au stationnement ou des lave-projecteurs, comprenant un posage apte à recevoir une pièce de carrosserie, un poinçon maintenu en position de repos à distance du posage et des moyens de déplacement du poinçon d'abord sur une première course en direction du posage, pour l'amener en position d'utilisation à proximité de la pièce, puis sur une seconde course pour percer ladite pièce, les moyens de déplacement étant prévus pour que le déplacement du poinçon sur la seconde course s'effectue à une vitesse de déplacement par rapport à la pièce n'excédant pas 10 mm/s. La machine est caractérisée en ce que les moyens de déplacement sont prévus pour que le déplacement du poinçon sur la première course s'effectue à une vitesse de déplacement par rapport à la pièce d'au moins 50 mm/s.

La machine selon l'invention peut en outre présenter l'une ou plusieurs des caractéristiques suivantes, considérées seules ou en combinaison.
- Les moyens de déplacement comprennent un vérin à chambres multiples pour la première course et pour la seconde course,
- les moyens de déplacement comprennent un vérin d'approche pour la première course et un moyen distinct du vérin d'approche, pour la seconde course,
- les moyens de déplacement comprennent un vérin de poinçonnage pour la seconde course,
- le vérin de poinçonnage est couplé à un mécanisme de démultiplication d'efforts,
- le mécanisme de démultiplication d'effort comprend une came agissant comme un coin sur un galet de came solidaire du poinçon,
- le mécanisme de démultiplication d'effort comprend un levier articulé sur un axe solidaire du châssis et actionné par un vérin, ledit levier exerçant un effort par effet de levier sur un support du poinçon pour provoquer le déplacement du poinçon sur sa seconde course de déplacement.
- le poinçon est monté à une première extrémité d'une colonne axialement mobile ayant une première et une seconde extrémité opposées et dont la longueur est sensiblement celle de la première course et qui parcourt la première course pour venir placer sa seconde extrémité dans le voisinage du mécanisme de démultiplication d'effort pour subir une poussée de la part de ce mécanisme pendant la seconde course,
- le mécanisme de démultiplication d'efforts comprend une came agissant comme un coin sur un galet de came solidaire du poinçon,
- le poinçon et les éléments mobiles avec ledit poinçon lors de la première course sont reliés à un contrepoids qui réduit leur poids apparent,
- le poids apparent précité est choisi pour que le poinçon et les éléments mobiles avec lui se déplacent depuis la position de repos du poinçon jusqu'à sa position d'utilisation sous l'effet de leur seul poids apparent, le vérin d'approche ayant pour fonction de ramener le poinçon de sa position d'utilisation à sa position de repos et éventuellement de régler la vitesse d'approche.
- le vérin d'approche et/ou le vérin de poinçonnage est un vérin pneumatique.

L'invention a enfin pour objet une utilisation de la machine et une pièce de carrosserie obtenue par mise en oeuvre du procédé décrit ci-dessus.

Afin de mieux faire comprendre l'invention, on va en décrire maintenant un mode de réalisation donné à titre d'exemple non limitatif en référence au dessin annexé dans lequel :
- la figure 1 est une vue en perspective d'une machine de poinçonnage conçue pour une mise en oeuvre du procédé selon l'invention,
- la figure 2 est une vue depuis le côté opposé de la machine dans la position de la figure 3,
- les figures 3 à 6 sont des vues analogues à la figure 1 montrant la machine dans différents états au fur et à mesure du déroulement du procédé,
- la figure 7 est une vue en perspective d'un deuxième mode de réalisation d'une machine de poinçonnage conçue pour une mise en oeuvre du procédé selon l'invention,
- la figure 8 est une vue en perspective d'un troisième mode de réalisation d'une machine de poinçonnage conçue pour une mise en oeuvre du procédé selon l'invention.

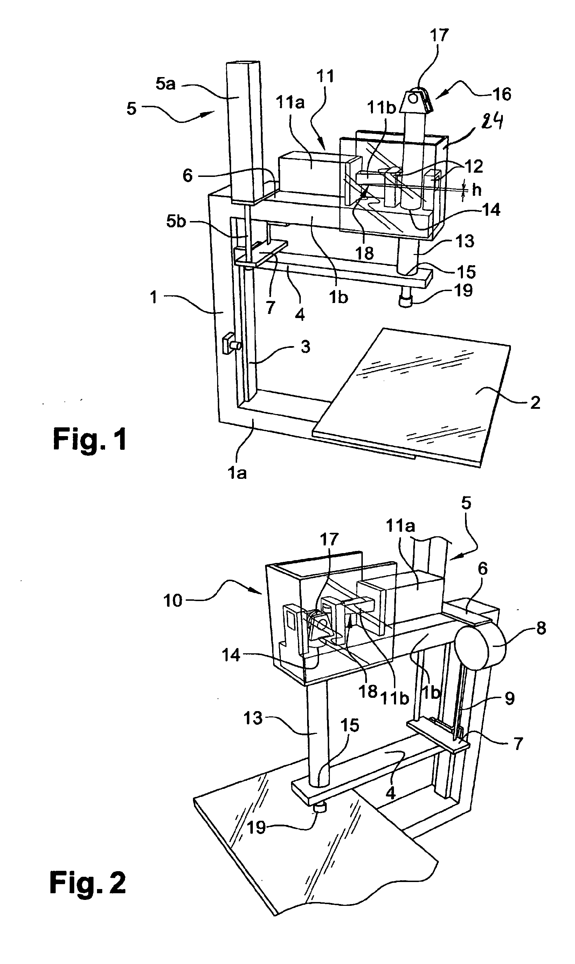

Sur les figures 1 à 6, on utilise les références suivantes :
1 est un châssis en forme de U couché, reposant sur sa branche 1 a servant de base au châssis.
2 est un « posage », c'est-à-dire un support destiné à recevoir une pièce de carrosserie devant subir le procédé de poinçonnage. Le posage 2 repose sur la base 1 a du châssis 1.
3 est un rail de guidage vertical. Bien entendu, l'orientation du rail de guidage dépend de la course d'approche du poinçon. On fait ici l'hypothèse que la peau (non représentée) à poinçonner est horizontale, mais compte tenu de la forme souvent galbée des peaux, il est évident que d'autres rails, non représentés, doivent être prévus avec des inclinaisons par rapport à la verticale.
4 est une tablette mobile apte à coulisser le long du rail 3.
5 est un vérin pneumatique à débattement vertical, dont le corps 5a est fixé au châssis 1 par l'intermédiaire d'une réglette 6, et dont la tige 5b, en saillie du corps 5a vers le bas, est solidaire de la tablette mobile 4 par l'intermédiaire d'une autre réglette 7.
8 est un contrepoids, fixé à la réglette 6. Le contrepoids 8 est ici un enroulement d'un cordon 9 rappelé élastiquement par un ressort hélicoïdal (non visible) en position rentrée. Le cordon 9 est relié, par son extrémité libre, à la réglette 7 solidaire de la tablette mobile 4. Le contrepoids 8 compense une partie de la masse des pièces verticalement mobiles, comme cela sera expliqué plus en détail ultérieurement.
10 désigne un moyen de déplacement porté par la branche haute 1 b du châssis 1. Ce moyen 10 comprend :
   - un vérin pneumatique horizontal (ici horizontal, car fonctionnant en combinaison avec le vérin vertical 5) 11 dont le corps 11a est fixé à la branche 1 b du châssis et la tige 11 b fait saillie horizontalement en direction du côté ouvert du châssis. Dans un segment d'extrémité s'étendant sur environ 20 cm, la tige 11 b est biseautée, c'est-à-dire qu'elle a une section transversale trapézoïdale (dans un plan vertical parallèle au châssis) avec un petit côté à l'avant et un grand côté à l'arrière de cette section. Le grand côté correspond à l'épaisseur courante de la tige 11 b à la sortie du vérin. Dans ce segment d'extrémité biseauté, la face inférieure 18 de la tige est inclinée sur un dénivelé h, tandis que sa face supérieure (opposée à la face inclinée 18) est horizontale,
   - deux guides 12 constitués par des murets munis d'orifices de guidage de la tige 11 b du vérin horizontal, dimensionnés pour permettre à la face supérieure horizontale de la tige 11 b de demeurer en contact avec le bord supérieur de chaque orifice pour pouvoir s'y appuyer,
   - une colonne verticale 13, traversant la branche haute 1 b du châssis et la tablette mobile 4, par des orifices 14 et 15 prévus à cet effet dans chacune d'elles. L'extrémité haute 16 de la colonne porte un galet 17. La colonne 13 peut coulisser verticalement par rapport à la branche haute 1 b à travers l'orifice 14, tandis qu'elle est solidaire de la tablette 4 en étant coincée dans l'orifice 15. Ainsi, lorsque la tablette 4 et la colonne 13 descendent vers le bas, le galet 17 se positionne juste en dessous de l'extrémité avant de la tige 11b du vérin horizontal 11, dans le dénivelé h. Une fois dans cette position, le galet 17 vient rouler contre la face inférieure inclinée 18 de la tige 11b si cette dernière avance entre les deux guides 12 sous l'effet du vérin horizontal 11, ce qui provoque une descente de la colonne 13 sur une hauteur légèrement inférieure au dénivelé h (h étant le maximum, qui est atteint si le galet rencontre l'arête inférieure avant de la tige).

A l'extrémité opposée au galet 17, la colonne 13 porte un poinçon 19 (constitué de façon classique d'une matrice et d'un dévétisseur) et forme donc un support du poinçon 19.

Le contrepoids 8 compense une partie de la masse de l'ensemble (désigné « unité mobile ») constitué par le poinçon 19 et les éléments mobiles avec le poinçon lors de la première course, à savoir la tige de vérin 5b, la tablette 4, la réglette 7, la colonne 13 et le galet 17, tant à la descente qu'à la remontée.

Le moyen de déplacement 10 est sécurisé par un capot 24 qui évite qu'un opérateur puisse glisser un doigt ou sa main entre le galet 17 et la tige 11 b du vérin 11 lorsque ce dernier est actionné.

On va maintenant décrire les différentes étapes du déroulement du procédé.
Figure 1 : Le dispositif est au repos. Aucun vérin n'est actionné. La tablette 4 est en position haute, tout comme la colonne 13.

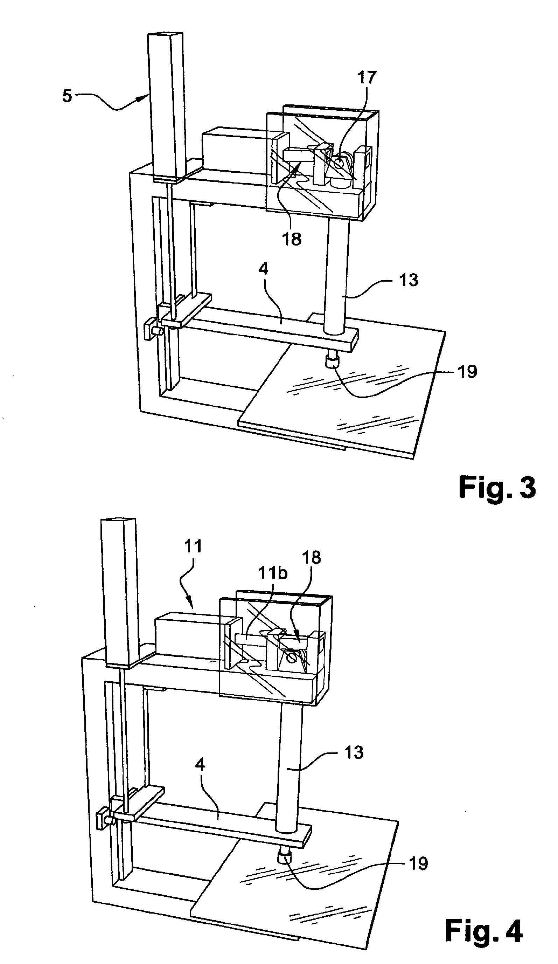

Figure 3 : Le vérin vertical 5 a laissé descendre l'unité mobile vers le bas, sous l'effet de son poids apparent (résultant de la différence entre son poids réel et le poids compensé par le contrepoids 8). Le galet 17 se retrouve en regard de la face inférieure inclinée 18 de la tige du vérin horizontal 11. Ce premier mouvement s'est produit à vitesse élevée, c'est-à-dire à 100 mm/s, sous le contrôle du vérin 5.

A l'issue de ce mouvement, le poinçon 18 se trouverait à proximité de la peau (non représentée) d'une pièce de carrosserie si une telle pièce était positionnée sur le posage 2.

On comprend donc que le vérin vertical 5, sous l'effet de son poids apparent, ne peut pas blesser l'opérateur. En effet, grâce au contrepoids 8, la descente du vérin 5 est facilement arrêtée par un obstacle que rencontrerait le poinçon 19 sur la première course. Lors de cette première course, la machine est donc sécurisée vis-à-vis de l'opérateur car la force avec laquelle le poinçon 19 descend est telle qu'elle ne peut pas blesser l'opérateur.

Figure 4 : Le vérin horizontal 11 a poussé vers l'avant la tige 11 b, dont la face supérieure est restée en appui contre les bords supérieurs des orifices des guides 12 et dont la face inférieure inclinée 18 a repoussé vers le bas le galet 17, donc la colonne 13 avec le poinçon 18 et la tablette 4, sur une faible hauteur. Ce second mouvement, qui correspond à l'opération de perçage (poinçonnage proprement dit) d'une pièce de carrosserie si elle était présente sur le posage 2, s'est produit à vitesse lente, du fait du rapport entre la course horizontale de la tige 11 b et la course verticale de la colonne 13. Du fait de ce même rapport, la puissance du perçage est démultipliée dans les mêmes proportions, de sorte que même avec un vérin horizontal 11 de puissance réduite, on peut atteindre une puissance de poinçonnage suffisante. L'ensemble constitué par l'extrémité biseautée de la tige horizontale 11 b, les guides 12 et le galet 17 forme un démultiplicateur d'effort pour le poinçonnage. Tout autre système pourrait être prévu pour remplir la même fonction, par exemple un mécanisme de renvoi à bras de levier, ou palonnier.

On comprend donc que lors de l'opération de perçage, la course du poinçon est de quelques millimètres, de préférence inférieure à 5 mm. En effet, elle correspond au maximum au déplacement vertical d'une distance h de la colonne 13 sous l'action de la tige 11 b du vérin horizontal 11. Cette distance ne permet pas à un opérateur de glisser la main ou un doigt entre le poinçon 19 et la pièce à poinçonner. En d'autres termes, le poinçon 19 est déplacé sur sa première course jusqu'à une distance faible de la pièce à poinçonner où le galet 17 se retrouve en regard de la face inférieure inclinée 18 de la tige du vérin horizontal 11 et où le vérin horizontal 11 peut être actionné. On comprend que tant que le galet 17 n'est pas en regard de la face inférieure inclinée 18 de la tige du vérin horizontal 11, le vérin horizontal 11 ne peut être mis en marche. Par conséquent, cette machine permet de sécuriser le poste de travail pour l'opérateur qui ne peut, par inadvertance, être blessé par le poinçon 19 lors de l'opération de perçage ou lors de la descente du poinçon 19 pendant la première course.

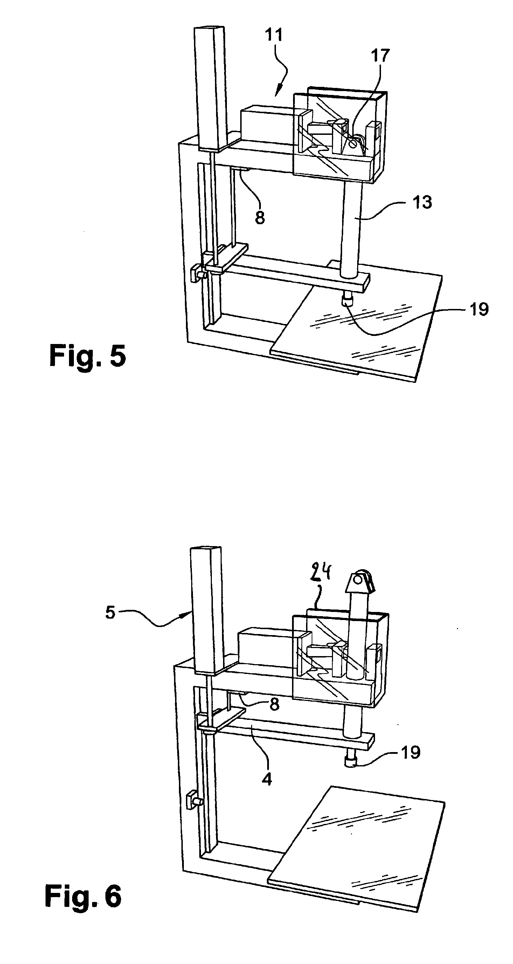

Figure 5 : le vérin horizontal 11 revient en position initiale, tige 11 b rentrée.
Figure 6 : le vérin vertical 5 fait remonter la tablette 4 (et donc aussi la colonne 13 et les autres constituants de l'unité mobile). Grâce au contrepoids, le vérin 5 n'a qu'à vaincre le poids apparent de l'unité mobile.

On comprend ainsi que, hormis le capot de protection fixe 24, la sécurisation de la machine de poinçonnage ne nécessite pas la mise en place de protections particulières pour protéger l'opérateur. De ce fait, on peut réduire les temps morts d'utilisation de la machine et augmenter la productivité car l'opérateur n'a pas besoin d'ouvrir et de fermer des capots de sécurité, par exemple pour placer une pièce à poinçonner dans la machine et/ou la retirer. En outre, bien qu'il n'y ait pas de capot de protection à ouvrir et à fermer, il n'est pour autant pas nécessaire de mettre en place des barrières immatérielles. Cette machine est donc sécurisée et peut être fabriquée avec des éléments peu coûteux.

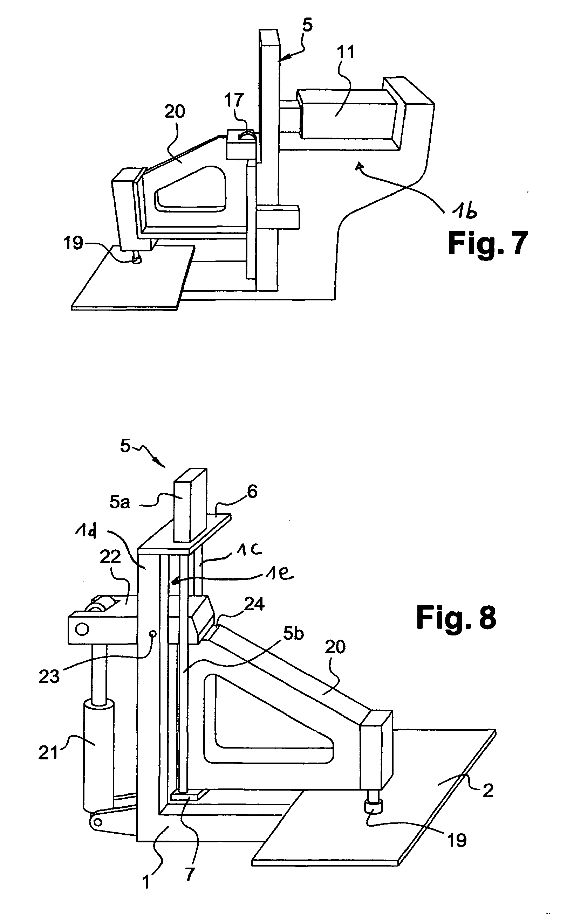

Les figures 7 et 8 présentent un deuxième et un troisième mode de réalisation de l'installation dans lesquels les éléments communs aux trois modes de réalisation sont identifiés par les mêmes références numériques.

Le mode de réalisation représenté à la figure 7 diffère du premier mode de réalisation en ce que la machine ne comprend pas de contrepoids et en ce que le rail vertical de guidage se compose de deux montants verticaux 1 c et 1 d qui laissent entre eux un espace 1 e. La colonne 13 et la tablette mobile 4 ont été remplacées par un support 20 de forme essentiellement trapézoïdale dont deux côtés parallèles sont verticaux. Un premier côté vertical est parallèle à la branche verticale du châssis 1 et comprend des moyens aptes à coulisser le long du rail 3. Le second côté vertical porte le poinçon 19, le poinçon 19 se trouvant au voisinage de la partie basse du support 20.

Un vérin pneumatique horizontal 11 est fixé sur la branche 1 b du châssis faisant saillie à l'opposé du support 20 par rapport à la branche verticale du châssis. Le vérin pneumatique horizontal 11 agit sur une tige biseautée 11 b traversant l'espace 1 e entre les deux montants 1 c et 1 d.

La tige biseautée 11 b peut se déplacer horizontalement, sous l'action du vérin 11, en direction du poinçon.

A son extrémité supérieure, le support 20 comprend, au voisinage de la branche verticale du châssis 1, un galet 17 destiné à coopérer avec la face inférieure de la tige biseautée 11b du vérin pneumatique horizontal 11.

Le procédé de poinçonnage est identique à celui décrit précédemment. Toutefois, le déplacement du poinçon 19 sur la première course est entièrement contrôlé par le vérin pneumatique vertical 5 qui vient positionner le galet 17 en regard de la face inférieure inclinée 18 de la tige du vérin horizontal 11.

Avantageusement, le vérin pneumatique vertical 5 est un vérin à faible pression. Aussi, si, lors de la première course, le poinçon 19 rencontre un obstacle, la faible contre-pression exercée sur ce vérin par l'obstacle va provoquer un arrêt, voire un déplacement vers le haut du vérin 5 dans sa position de repos. La pression de contact du vérin vertical 5 est inférieure à 50 N/cm².

Tout comme dans le premier mode de réalisation, la machine est sécurisée. En effet, le vérin pneumatique horizontal 11 ne peut être actionné que lorsque le galet 17 est positionné en regard du vérin horizontal 11. Dans cette position, le poinçon 19 est à une distance de la pièce à poinçonner qui permet de s'assurer que l'opérateur ne peut, par mégarde, glisser sa main ou une autre partie de son corps entre le poinçon 19 et la pièce à poinçonner.

Aussi, pendant que le poinçon 19 se déplace en force sur sa seconde course, l'opérateur ne peut pas être blessé.

Dans le mode de réalisation représenté à la figure 8, le châssis 1 à la forme d'un L et repose sur sa branche 1a servant de base audit châssis. La branche verticale du châssis comprend deux montants 1c et 1d espacés, comme dans le mode de réalisation précédent. Les moyens de déplacement 10 comprennent notamment, pour le poinçonnage, un vérin pneumatique 21 relié à une pièce 22 formant levier pour déplacer le poinçon 19 sur sa seconde course. Le levier prend appui sur un axe d'appui 23 traversant les deux montants 1c et 1d de la branche verticale du châssis et exerce une pression verticale sur une surface renforcée 24 du support 20 lorsque le vérin 21 repousse la pièce 22 vers le haut.

Le positionnement de l'axe d'appui 23 permet l'escamotage (non représenté) de la pièce formant levier 22 de l'espace 1 e présent entre les montants 1 c et 1 d pour permettre le coulissement du support 20 vers le haut (par rapport à la figure 8) ou vers le bas lors des déplacements dudit support sur la première course (course d'approche)

Il est bien entendu que les mode des réalisation décrits ci-dessus ne sont pas limitatifs.

## Revendications

1. Procédé de poinçonnage de pièces de carrosserie, notamment d'une peau pour y installer des capteurs d'aide au stationnement ou des lave-projecteurs, selon lequel on dépose une pièce de carrosserie sur un posage (2) à distance duquel un poinçon (19) est maintenu en position de repos et on déplace le poinçon (19) d'abord sur une première course en direction du posage (2) pour l'amener à proximité de la pièce, puis sur une seconde course pour percer ladite pièce, le déplacement du poinçon (19) sur la seconde course s'effectuant à une vitesse de déplacement par rapport à la pièce n'excédant pas 10mm/s et inférieure à la vitesse de déplacement du poinçon (19) sur la première course, **caractérisé en ce qu'**on déplace le poinçon sur la première course à l'aide d'un moyen de déplacement (5) et sur la seconde course à l'aide d'un vérin de poinçonnage (11, 21) couplé à un mécanisme de démultiplication d'effort, le vérin de poinçonnage (11, 21) étant distinct du moyen de déplacement (5).

2. Procédé selon la revendication 1, dans lequel, après la première course, la distance séparant la pièce à poinçonner et le poinçon est de préférence inférieure à 5 mm.

3. Machine de poinçonnage de pièces de carrosserie, notamment d'une peau pour y installer des capteurs d'aide au stationnement ou des lave-projecteurs, comprenant un posage (2) apte à recevoir une pièce de carrosserie, un poinçon (19) maintenu en position de repos à distance du posage (2) et des moyens de déplacement du poinçon (19) d'abord sur une première course en direction du posage, pour l'amener en position d'utilisation à proximité de la pièce, puis sur une seconde course pour percer ladite pièce, les moyens de déplacement (5, 10) étant prévus pour que le déplacement du poinçon (19) sur la seconde course s'effectue à une vitesse de déplacement par rapport à la pièce n'excédant pas 10mm/s et inférieure à la vitesse de déplacement du poinçon (19) sur la première course, **caractérisée en ce que** le moyen de déplacement du poinçon (19) sur la première course est distinct du moyen de déplacement du poinçon (19) sur la seconde course et **en ce que** le moyen de déplacement du poinçon (19) sur la seconde course comprend un vérin de poinçonnage (11, 21) couplé à un mécanisme de démultiplication d'effort.

4. Machine selon la revendication 3, dans laquelle les moyens de déplacement (5, 10) comprennent un vérin d'approche (5) pour la première course.

5. Machine selon la revendication 3 ou 4, dans laquelle le poinçon (19) est monté à une première extrémité d'un support (13, 20) axialement mobile ayant une première et une seconde extrémité opposées et qui parcourt la première course pour venir placer sa seconde extrémité (16, 24) dans le voisinage du mécanisme de démultiplication d'effort pour subir une poussée de la part de ce mécanisme pendant la seconde course.

6. Machine selon l'une quelconque des revendications 3 à 5, dans laquelle le mécanisme de démultiplication d'effort comprend une came (18) agissant comme un coin sur un galet de came (17) solidaire du poinçon (19).

7. Machine selon l'une quelconque des revendications 3 à 5, dans laquelle le mécanisme de démultiplication d'effort comprend un levier (22) articulé sur un axe (23) solidaire du châssis et actionné par un vérin (21), ledit levier (22) exerçant un effort par effet de levier sur un support (20) du poinçon (19) pour provoquer le déplacement du poinçon sur sa seconde course de déplacement.

8. Machine selon l'une quelconque des revendications 3 à 7, dans laquelle le vérin d'approche (5) et/ou le vérin de poinçonnage (19) est un vérin pneumatique.

9. Utilisation d'une machine selon l'une quelconque des revendications 3 à 8 pour poinçonner des pièces de carrosserie.

## Patentansprüche

1. Verfahren zum Stanzen von Karosserieteilen, insbesondere einer Beplankung, um darin Einparksensoren oder Scheinwerferreinigungsanlagen zu installieren, bei dem ein Karrosserieteil auf einem Gestell (2) abgelegt wird, in Abstand zu dem ein Stößel (19) in Ruhestellung gehalten wird, und der Stößel (19) zunächst über einen ersten Hub in Richtung des Gestells (2) bewegt wird, um ihn in die Nähe des Teils zu bringen, und dann über einen zweiten Hub bewegt wird, um das Teil zu durchbohren, wobei die Bewegung des Stößels (19) über den zweiten Hub mit einer Bewegungsgeschwindigkeit relativ zu dem Teil erfolgt, die 10 mm/s nicht übersteigt und die geringer ist als die Bewegungsgeschwindigkeit des Stößels (19) über den ersten Hub, **dadurch gekennzeichnet, dass** der Stößel über den ersten Hub mit Hilfe eines Bewegungsmittels (5) und über den zweiten Hub mit Hilfe eines Stanzzylinders (11, 21) bewegt wird, der mit einem Kraftuntersetzungsmechanismus gekoppelt ist, wobei der Stanzzylinder (11, 21) von dem Bewegungsmittel (5) verschieden ist.

2. Verfahren nach Anspruch 1, bei dem, nach dem ersten Hub, der Abstand, der das zu stanzende Teil und den Stößel trennt, vorzugsweise kleiner als 5 mm ist.

3. Maschine zum Stanzen von Karosserieteilen, insbesondere einer Beplankung, um darin Einparksensoren oder Scheinwerferreinigungsanlagen zu installieren, umfassend ein Gestell (2), das für die Aufnahme eines Karosserieteils eingerichtet ist, einen Stößel (19), der in Abstand zu dem Gestell (2) in Ruhestellung gehalten wird, und Mittel zum Bewegen des Stößels (19) zunächst über einen ersten Hub in Richtung des Gestells, um ihn in Benutzungsposition in die Nähe des Teils zu bringen, und dann über einen zweiten Hub, um das Teil zu durchbohren, wobei die Bewegungsmittel (5, 10) vorgesehen sind, damit die Bewegung des Stößels (19) über den zweiten Hub mit einer Bewegungsgeschwindigkeit relativ zu dem Teil erfolgt, die 10 mm/s nicht übersteigt und die geringer ist als die Bewegungsgeschwindigkeit des Stößels (19) über den ersten Hub, **dadurch gekennzeichnet, dass** das Mittel zum Bewegen des Stößels (19) über den ersten Hub von dem Mittel zum Bewegen des Stößels (19) über den zweiten Hub verschieden sind und dass das Mittel zum Bewegen des Stößels (19) über den zweiten Hub einen Stanzzylinder (11, 21) umfasst, der mit einem Kraftuntersetzungsmechanismus gekoppelt ist.

4. Maschine nach Anspruch 3, wobei die Bewegungsmittel (5, 10) einen Vorschubzylinder (5) für den ersten Hub umfassen.

5. Maschine nach Anspruch 3 oder 4, wobei der Stößel (19) an einem ersten Ende eines in axialer Richtung beweglichen Trägers (13, 20) gelagert ist, der ein erstes und ein zweites Ende hat, die entgegengesetzt sind, und der den ersten Hub abfährt, um sein zweites Ende (16, 24) in die Nähe des Kraftuntersetzungsmechanismus zu platzieren, um einen Schub seitens dieses Mechanismus während des zweiten Hubs zu erfahren.

6. Maschine nach einem der Ansprüche 3 bis 5, wobei der Kraftuntersetzungsmechanismus einen Nocken (18) umfasst, der als Keil auf eine Nockenrolle (17) einwirkt, die mit dem Stößel (19) fest verbunden ist.

7. Maschine nach einem der Ansprüche 3 bis 5, wobei der Kraftuntersetzungsmechanismus einen Hebel (22) umfasst, der an einer Achse (23) angelenkt ist, die mit dem Chassis fest verbunden ist, und von einem Zylinder (21) betätigt wird, wobei der Hebel (22) durch Hebelwirkung eine Kraft auf einen Träger (20) des Stößels (19) ausübt, um die Bewegung des Stößels auf seinem zweiten Bewegungshub zu bewirken.

8. Maschine nach einem der Ansprüche 3 bis 7, wobei der Vorschubzylinder (5) und/oder der Stanzzylinder (19) ein pneumatischer Zylinder ist.

9. Verwendung einer Maschine nach einem der Ansprüche 3 bis 8, um Karrosserieteile zu stanzen.

## Claims

1. Method for punching bodywork components, in particular a skin in order to install parking-assistance sensors or headlight washers therein, in which method a bodywork component is placed on a shelf (2), a punch (19) is held at a distance from the shelf and in a rest position, and the punch (19) is moved towards the shelf (2) initially over a first stroke in order to bring it close to the component, and then over a second stroke in order to pierce said component, the movement of the punch (19) over the second stroke being performed at a travel speed relative to the component that does not exceed 10 mm/s and that is less than the travel speed of the punch (19) over the first stroke, the method being **characterized in that** the punch is moved over the first stroke with the help of movement means (5) , and over the second stroke with the help of a punching actuator (11, 21) coupled to a force-demultiplication mechanism, the punching actuator (11, 21) being distinct from the movement means (5).

2. Method according to claim 1, wherein, after the first stroke, the distance between the component to be punched and the punch is preferably less than 5 mm.

3. Machine for punching bodywork components, in particular a skin in order to install parking-assistance sensors or headlight washers therein, the machine comprising a shelf (2) suitable for receiving a bodywork component, a punch (19) that is held at a distance from the shelf (2) and in a rest position, and movement means for moving the punch (19) towards the shelf, initially over a first stroke in order to bring it into a utilization position close to the component, and then over a second stroke in order to pierce said component, the movement means (5, 10) being designed so that the movement of the punch (19) over the second stroke takes place at a travel speed relative to the component that does not exceed 10 mm/s and that is less than the travel speed of the punch (19) over the first stroke, the machine being **characterized in that** the movement means for moving the punch (19) over the first stroke are distinct from the movement means for moving the punch (19) over the second stroke, and **in that** the movement means for moving the punch (19) over the second stroke comprise a punching actuator (11, 21) coupled to a force-demultiplication mechanism.

4. Machine according to claim 3, wherein the movement means (5, 10) comprise an approach actuator (5) for the first stroke.

5. Machine according to claim 3 or claim 4, wherein the punch (19) is mounted at a first end of an axially-movable support (13, 20) that has opposite first and second ends and that travels over the first stroke in order to place its second end (16, 24) in the vicinity of the force-demultiplication mechanism so as to be subjected to thrust from said mechanism during the second stroke.

6. Machine according to any of claims 3 to 5, wherein the force-demultiplication mechanism comprises a cam (18) acting as a wedge on a cam wheel (17) secured to the punch (19).

7. Machine according to any of claims 3 to 5, wherein the force-demultiplication mechanism comprises a lever (22) hinged on a shaft (23) secured to the frame and actuated by an actuator (21), said lever (22) exerting a force on a support (20) of the punch (19) by the lever effect in order to make the punch move over its second movement stroke.

8. Machine according to any of claims 3 to 7, wherein the approach actuator (5) and/or the punching actuator (19) is a pneumatic cylinder.

9. Use of a machine according to any of claims 3 to 8 for punching bodywork components.
